# EUROPEAN PATENT SPECIFICATION

(11) **EP 4 250 105 B1**
(45) Date of publication and mention of the grant of the patent: **28.01.2026**
(21) Application number: 22209445.0
(22) Date of filing: 24.11.2022
(51) Int. Cl.: G06F 9/455

(54) **COMMUNICATION METHOD BETWEEN VIRTUAL MACHINES USING MAILBOXES, SYSTEM-ON CHIP PERFORMING COMMUNICATION METHOD, AND IN-VEHICLE INFOTAINMENT SYSTEM INCLUDING SAME**
KOMMUNIKATIONSVERFAHREN ZWISCHEN VIRTUELLEN MASCHINEN MIT BRIEFKÄSTEN, KOMMUNIKATIONSVERFAHREN MIT EINEM SYSTEM-ON-CHIP UND INFOTAINMENTSYSTEM AN BORD EINES FAHRZEUGS DAMIT
PROCÉDÉ DE COMMUNICATION ENTRE DES MACHINES VIRTUELLES UTILISANT DES BOÎTES AUX LETTRES, SYSTÈME SUR PUCE EXÉCUTANT UN PROCÉDÉ DE COMMUNICATION, ET SYSTÈME D'INFODIVERTISSEMENT EMBARQUÉ LE COMPRENANT

(30) Priority: 22.03.2022 KR 20220035617; 26.09.2022 US 202217952955
(43) Date of publication of application: 27.09.2023
(73) Proprietor: Samsung Electronics Co., Ltd., Gyeonggi-do 16677 (KR)
(72) Inventor: NA, Sowon, Suwon-si 16677 (KR); KWON, Gyunghoon, Suwon-si 16677 (KR); OH, Ji-Heon, Suwon-si 16677 (KR)
(74) Representative: Marks & Clerk LLP

(56) References cited:
- US-A1- 2017 187 694
- US-B1- 11 099 911
- US-B2- 11 099 775
- US-B2- 7 937 701

## Description

### BACKGROUND

Embodiments of the inventive concept provide communication methods between virtual machines. More particularly, embodiments of the inventive concept provide communication methods between virtual machines using mailboxes included in memory controller(s). Other embodiments of the inventive concept provide system-on-chip devices performing communication methods between virtual machines using mailboxes, as well as in-vehicle infotainment systems such system-on-chip devices.

In past applications such as mobile devices, it was common for an embedded system to drive only a single operating system. However, with the emergence of electric vehicles, an embedded system within an electric vehicle may be used to drive a plurality of operating systems. With this configuration a so-called "hypervisor" is required to store data variously accessed (e.g., read or written) by the plurality of operating systems. In this regard, the hypervisor may be understood as a computational platform, program and/or operating system capable of managing one or more virtual machines. Accordingly, the hypervisor may be referred to as a virtual machine monitor or a virtual machine manager.

Further in this regard, the hypervisor may be used as an intermediary between a host virtual machine and a guest virtual machine, may isolate separate host virtual machines, and/or may allow the host virtual machine to support guest virtual machines executing different operating systems.
US2017187694A1 describes scalable techniques for data transfer between virtual machines (VMs). An apparatus comprises circuitry, a virtual machine management component for execution by the circuitry to define a plurality of public virtual memory spaces and assign each one of the plurality of public virtual memory spaces to a respective one of a plurality of VMs including a first VM and a second VM, and a virtual machine execution component for execution by the circuitry to execute a first virtual machine process corresponding to the first VM and a second virtual machine process corresponding to the second VM. The first virtual machine process identifying data to be provided to the second VM by the first VM, and provide the data to the second VM by writing to a public virtual memory space assigned to the first VM.
US7937701B2 describes a method, apparatus and system to enable bi-directional communications between a virtual machine monitor (VMM) and an Advanced Configuration & Power Interface (ACPI) compliant guest operating system. US11099911B1 describes a method which includes determining, at a first inter-partition messenger, a message type for a message generated by a first application. US11099775B2 describes a data storage device that includes at least one non-volatile memory and a controller with two-layer architecture.

### SUMMARY

Embodiments of the inventive concept provide system-on-chip devices capable of communicating messages between virtual machines without use of a hypervisor by using mailboxes associated with respective memory controllers, wherein the mailboxes are directly connected via a bus.

Embodiments of the inventive concept provide in-vehicle infotainment systems including such a system-on-chip.

Embodiments of the inventive concept provide methods of communicating messages between virtual machines without use of a hypervisor by using mailboxes associated with respective memory controllers, wherein the mailboxes are directly connected via a bus.

In some embodiments, a system-on-chip is as defined in claim 1.

In some embodiments, an in-vehicle infotainment system is as defined in claim 11.

In some embodiments, a method for communicating between a first virtual machine and a second virtual machine is as defined in claim 14.

At least some of the above and other features of the invention are set out in the claims.

### BRIEF DESCRIPTION OF THE DRAWINGS

Advantages, benefits and features, as well as the making and use of the inventive concept may be better understood upon consideration of the following detailed description together with the accompanying drawings, in which:
FIG. 1 is a block diagram illustrating an in-vehicle infotainment system including a system-on-chip capable of performing communication between virtual machines by using mailboxes according to embodiments of the inventive concept;
FIGS. 2 and 3 are respective block diagrams further illustrating mailbox functionality when communicating messages between virtual machines; and
FIGS. 4, 5 and 6 are respective, conceptual diagrams further illustrating operation of virtual machines and corresponding mailboxes when communicating messages associated with various operations in relation to the system-on-chip of FIG. 1.

### DETAILED DESCRIPTION

Throughout the written description and drawings, like reference numbers and labels are used to denote like or similar elements, components and/or features.

Figure (FIG.) 1 is a block diagram illustrating an in-vehicle infotainment system 100 including a system-on-chip capable of performing communication between virtual machines using mailboxes according to embodiments of the inventive concept.

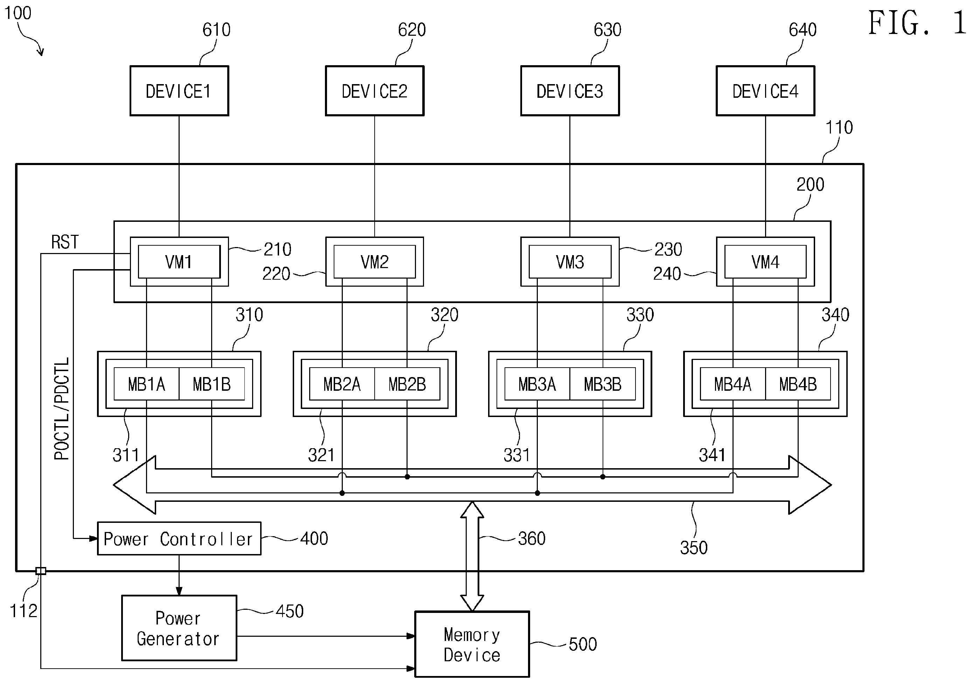

Referring to FIG. 1, the in-vehicle infotainment (IVI) system 100 may generally include a system-on-chip (SoC) 110, a power generator 450, a memory device 500, and a plurality of devices 610, 620, 630, and 640.

Here, the IVI system 100 may be understood as enabling, wholly or in part, an in-vehicle entertainment (ICE) system. That is, the IVI system 100 may include various hardware, firmware and/or software resources enabling audio and/or entertainment within a vehicle (e.g., automobile, van, truck, bus, aeroplane, etc.).

The IVI system 100 greatly expands entertainment options available in vehicles. Where once vehicles were limited to basic audio components such as a radio, a cassette player and/or a compact disk player, more contemporary vehicles may provide various dashboard system(s), display system(s), a navigation system, a video player, Universal Serial Bus (USB) and/or Bluetooth connectivity, in-vehicle-computers (e.g., carputers), and in-vehicle internet options, such as Wi-Fi.

In some embodiments, the SoC 110 may include a reset pin 112, a multi-core processor 200, a plurality of memory controllers (also referred to as host controller) 310, 320, 330, and 340, various connectivities 350 and 360 (e.g., a first bus 350 and a second bus 360), and a power controller 400.

The reset pin 112 may be used to send (or communicate) a reset signal RST - which may be provided by a first virtual machine 210 operating as a host virtual machine - to the memory device 500, wherein the memory device 500 is reset in response to the reset signal RST. In some embodiments, the reset pin 112 may be implemented using a general-purpose input/output (GPIO) pin.

The multi-core processor 200 may include a plurality of cores 210, 220, 230, and 240, wherein each of the plurality of cores 210, 220, 230, and 240 may be used to respectively execute a corresponding operating systems (OS). Here, each of the operating systems (OSs), are respectively executable in one of the plurality of cores 210, 220, 230, and 240 may be understood as constituting a "virtual machine" (e.g., VM1, VM2, VM3, and VM4). In some embodiments, the multi-core processor 200 may be referred to as a computer processor, and may be implemented as a single integrated circuit (IC) including two or more processing cores (e.g., the plurality of cores 210, 220, 230, and 240), wherein each of the cores 210, 220, 230, and 240 may be used to independently execute programming code defining a sequence of instructions including instructions corresponding to data access operations, such as read operations and write operations.

In some embodiments, one of the virtual machines VM1, VM2, VM3, and VM4 may be designated and operated as a "host virtual machine" or a "physical host" (e.g. virtual machine VM1), whereas the other virtual machines (e.g., virtual machines VM2, VM3, and VM4) may be designated and operated as respective "guest virtual machines" or "virtual hosts."

During operation, the respective virtual machines VM1, VM2, VM3, and VM4 may communicate input/output (hereafter, "I/O") commands to a corresponding memory controller 310, 320, 330, and 340, and/or receive various responses from same (e.g., through the use of interrupts). Ready examples of I/O commands include; read commands, write commands, erase commands, etc.

Operating as a virtual machine host server, the host virtual machine may be further understood as constituting an underlying virtual machine that controls computational resources (e.g., power, clock(s), processing time, memory space, disk memory space, network connectivity, etc.) in order to efficiently support operation by the guest virtual machines. In this regard, each software component respectively associated with a virtual machine - that is, each guest virtual machine - may be further understood as a "guest OS" capable of completely separate and independent execution. Yet further in this regard, the authority of the host virtual machine (or physical host) is always greater than any one the guest virtual machines (the virtual hosts). The utility of this configuration becomes clear when the memory device 500 of the IVI system 100 is recognized as a common resource capable of being independently accessed by the virtual machines VM1, VM2, VM3, and VM4, However, only the host virtual machine VM1 may control (or exercise authority over the) operation of the memory device 500 (e.g., application of power, application or frequency definition of clock(s), reset (e.g., cold reset or warm reset)).

In the illustration of FIG. 1, the first memory controller 310 includes a first mailbox 311 and may variously interact with the memory device 500 through the first and second buses 350 and 360 under control of the first virtual machine VM1. According to the invention, the first mailbox 311 includes a first sub-mailbox MB1A and a second sub-mailbox MB1B.

Analogously, the second memory controller 320 includes a second mailbox 321 including a first sub-mailbox MB2A and a second sub-mailbox MB2B, and may interact with the memory device 500 through the first and second buses 350 and 360 under control of the second virtual machine VM2; the third memory controller 330 includes a third mailbox 331 including a first sub-mailbox MB3A and a second sub-mailbox MB3B, and may interact with the memory device 500 through the first and second buses 350 and 360 under control of the third virtual machine VM3; and the fourth memory controller 340 includes a fourth mailbox 341 including a first sub-mailbox MB4A and a second sub-mailbox MB4B, and may interact with the memory device 500 through the first and second buses 350 and 360 under control of the fourth virtual machine VM4.

Each of the memory controllers 310, 320, 330, and 340 may be variously implemented in hardware. Furthermore, each of the mailboxes 311, 321, 331, and 341 may be variously implemented in hardware. For example, each of the mailboxes 311, 321, 331, and 341 may be implemented as at least one, corresponding register(s) (hereafter for simplicity, "registers").

In some embodiments, first-first registers implementing the first sub-mailbox MB1A, second-first registers implementing the first sub-mailbox MB2A, third-first registers implementing the first sub-mailbox MB3A, and fourth-first registers implementing the first sub-mailbox MB4A may be directly connected in hardware (i.e., physically connected). Accordingly, when the first virtual machine VM1 communicates data (hereafter generically referred to as a "message") via the first sub-mailbox MB1A, the message written in the first sub-mailbox MB1A may thereafter be directly written in one or more of the first sub-mailboxes MB2A, MB3A, and MB4A. This scheme allows the virtual machines VM2, VM3, and VM4 to respectively check for and utilize a message written in the first sub-mailboxes MB2A, MB3A, and MB4A. Here, the term "directly connected" denotes a physical connection (e.g., via one or more bus(es)) between memory controllers and/or mailboxes (e.g., registers) associated with the memory controllers without a material intervening device (e.g., a hypervisor, a processor, a memory, etc.) The direct connection may be considered a direct electrical connection (e.g. as opposed to a wireless connection).

The structure of various messages may vary by design, but may include a number of binary bits uniquely associated with content. For example, a power-on message (POMSG) may include "0x01", a power-off-ready message (PDMSG) may include "0x02", and a reset-ready message (SMSG) may include "0x03".

In some embodiments, first-second registers implementing the second sub-mailbox MB1B, second-second registers implementing the second sub-mailbox MB2B, third-second registers implementing the second sub-mailbox MB3B, and fourth-second registers implementing the second sub-mailbox MB4B may be physically connected in hardware. Accordingly, when the virtual machines VM2, VM3, and VM4 write respective messages in the second sub-mailboxes MB2B, MB3B, and MB4B - albeit with possible time differences, the messages written in the second sub-mailboxes MB2B, MB3B, and MB4B may be directly written in the second sub-mailbox MB1B. This scheme allows the first virtual machine VM1 to check for and utilize messages written in the second sub-mailbox MB1B.

Thus, according to the foregoing description, each of the first sub-mailboxes MB1A, MB2A, MB3A, and MB4A may be understood as a "physical host-to-virtual host mailbox," whereas each of the second sub-mailboxes MB1B, MB2B, MB3B, and MB4B may be understood as a "virtual host-to-physical host mailbox."

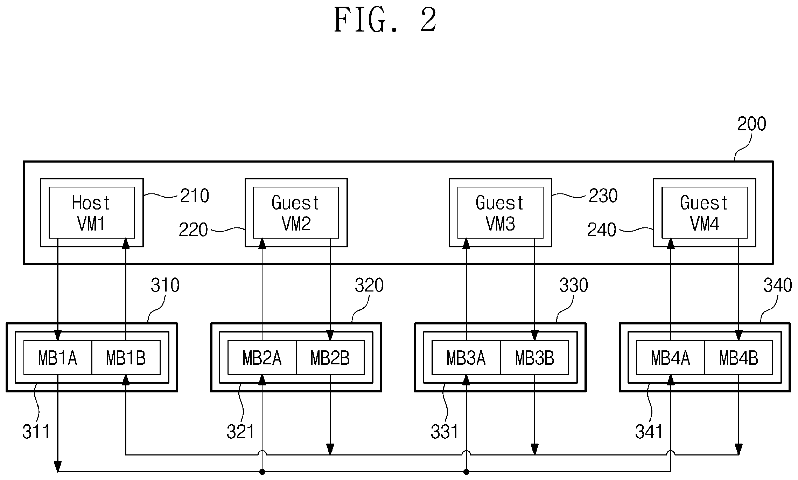

FIG. 2 is a conceptual diagram further illustrating in one example certain mailbox functionality between the controller 200 including virtual machines VM1, VM2, VM3, and VM4 and the corresponding memory controllers 310, 320, 330 and 340 of FIG.1. Here again, it is assumed that the first virtual machine VM1 operates as the host virtual machine, and the remaining virtual machines VM2, VM3, and VM4 operate as guest virtual machines.

Referring to FIG. 2, the first sub-mailbox MB1A of the first mailbox 311 may be used to send an outgoing message from the first virtual machine VM1 to one or more of the first sub-mailboxes MB2A, MB3A, and MB4A respectively associated with the mailboxes 321, 331, and 341. Further, the second sub-mailbox MB1B of the first mailbox 311 may be used to receive incoming message(s) from one or more of the second sub-mailboxes MB2B, MB3B, and MB4B respectively associated with the mailboxes 321, 331, and 341.

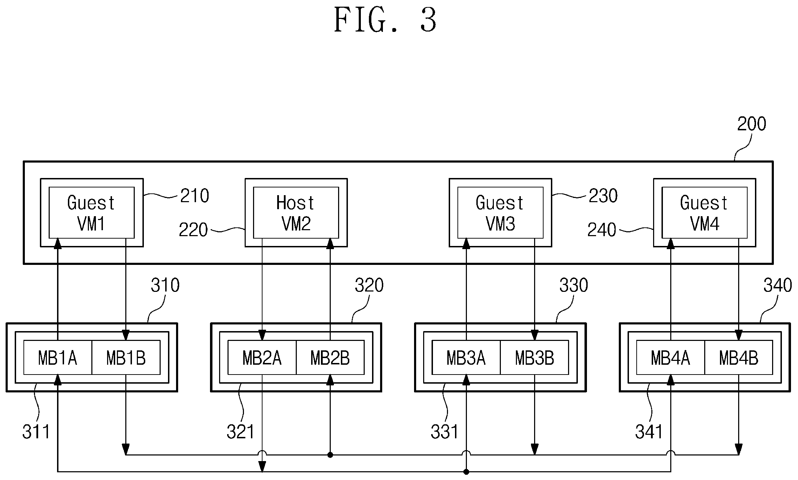

FIG. 3 is another conceptual diagram further illustrating in another example certain mailbox functionality between the controller 200 including virtual machines VM1, VM2, VM3, and VM4 and the corresponding memory controllers 310, 320, 330 and 340 of FIG.1. Here however, it is assumed that the second virtual machine VM2 operates as the host virtual machine, and the remaining virtual machines VM1, VM3, and VM4 operate as guest virtual machines.

Referring to FIG. 3, the first sub-mailbox MB2A of the second mailbox 321 may be used to send an outgoing message from the second virtual machine VM2 to one or more of the first sub-mailboxes MB1A, MB3A, and MB4A of the mailboxes 311, 331, and 341, and the second sub-mailbox MB2B of the first mailbox 321 may be used to incoming messages from the second sub-mailboxes MB1B, MB3B, and MB4B respectively associated with the mailboxes 311, 331, and 341.

Referring to FIGS. 1, 2 and 3, the first virtual machine VM1 may variously exchange messages with the second virtual machine VM2 using the first mailbox 311 and the second mailbox 321, may exchange messages with the third virtual machine VM3 using the first mailbox 311 and the third mailbox 331, and may exchange messages with the fourth virtual machine VM4 using the first mailbox 311 and the fourth mailbox 341.

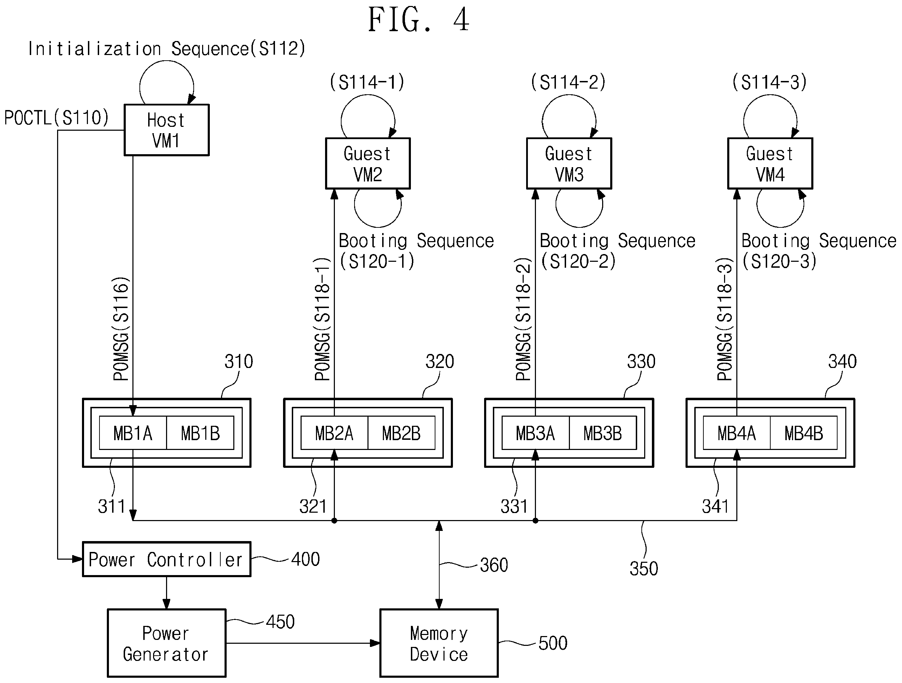

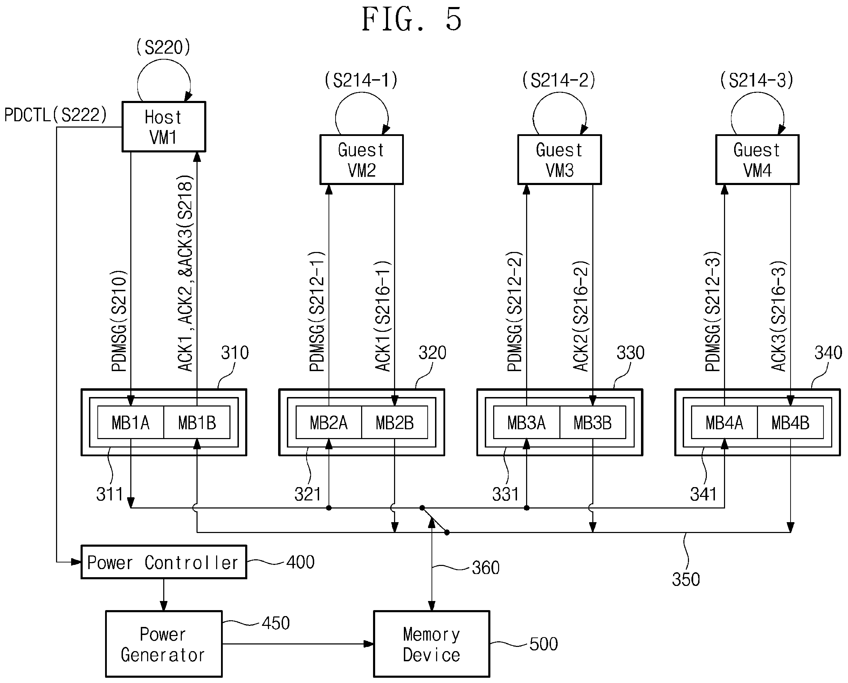

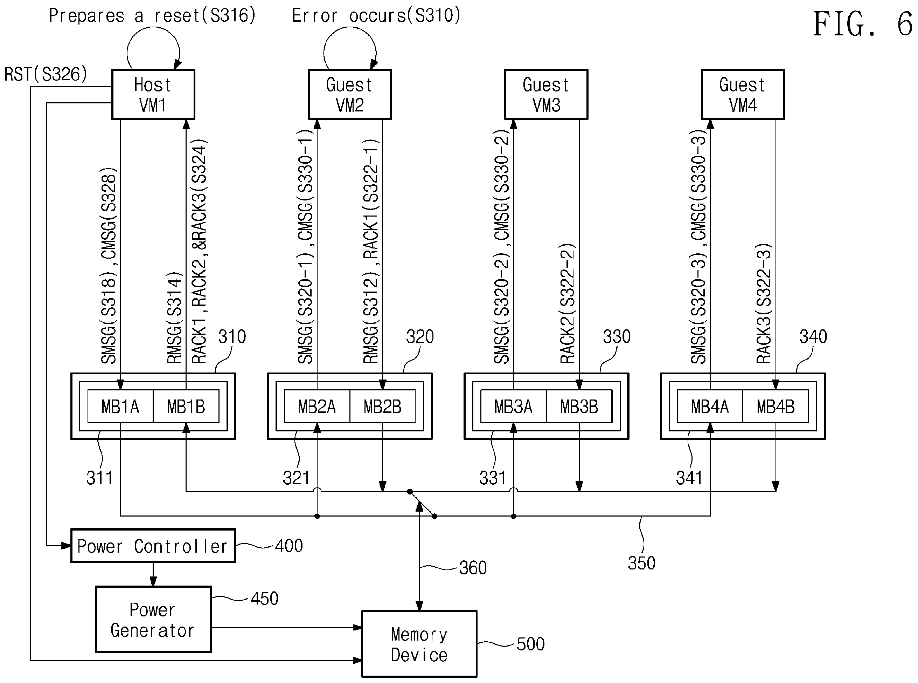

Hereinafter, one example of a first message (e.g., a power-on message for the memory device 500) being exchanged between the virtual machines VM1, VM2, VM3, and VM4 will be described in relation to FIG. 4, another example of a second message (e.g., a power-off message for the memory device 500) being exchanged between the virtual machines VM1, VM2, VM3, and VM4 will be described in relation to FIG. 5, and still another example of a third message (e.g., a reset message for the memory device 500) being exchanged between the virtual machines VM1, VM2, VM3, and VM4 will be described in relation to FIG. 6.

In the context of these illustrated examples, it will be understood that virtual machines implemented according to embodiments of the inventive concept may communicate using mailboxes respectively included in corresponding memory controllers (e.g., 310, 320, 330 and 340) and connected in hardware and no intervention by a hypervisor is required in order to facilitate communication of messages between the virtual machines.

FIGS. 4, 5 and 6 are respective conceptual diagrams illustrating various operations performed by one or more virtual machines in the system-on-chip of FIG. 1 according to embodiments of the inventive concept.

Referring to FIGS. 4, the first bus 350 is assumed to connect the memory controllers 310, 320, 330, and 340, and the second bus 360 is assume to connect the first bus 350 and the memory device 500. Further assuming that the first virtual machine VM1 operates as the host virtual machine, the first virtual machine VM1 may control operation of the power controller 400. The power controller 400 may be used to control the power generator 450 which in turn may be used to turn ON/OFF power supplied to the memory device 500.

In some embodiment, the power generator 450 may include a voltage generator configured to generate one or more power voltage(s) supplied to the memory device 500. For example, the power generator 450 may be a DC-DC converter, a buck converter, and/or a buck-boost converter, but the scope of the inventive concept is not limited thereto.

The memory device 500 may include volatile memory cells and/or nonvolatile memory cells. In some embodiments, the memory device 500 may be a universal flash storage, but the scope of the inventive concept is not limited thereto.

Referring to FIGS. 1 and 4, the first device 610 is assumed to operate under control of the first virtual machine VM1, the second device 620 is assumed to operate under control of the second virtual machine VM2, the third device 630 is assumed to operate under control of the third virtual machine VM3, and the fourth device 640 is assumed to operate under control of the fourth virtual machine VM4. Here, each of the first device 610, the second device 620, the third device 630 and the fourth device 640 may be respectively distinct from the other devices. Ready examples of the devices 610, 620, 630, and 640 include a dashboard, a navigation system (e.g. a car navigation system), a heads-up display system, an audio system (e.g. a car audio system), a seat back display system, a rear seat display system, a camera system, etc.

As noted above, a power-on operation for the memory device 500 will be described in relation to FIGS. 1, 2, 3 and 4, wherein the first virtual machine VM1 is assumed to operate as the host virtual machine and the remaining virtual machines (VM2, VM3, and VM4) operate as guest virtual machines.

Accordingly, the first virtual machine VM1 generates a power-on control signal POCTL for supplying a power (e.g., one or more power voltage(s)) to the memory device 500, and provides the power-on control signal POCTL to the power controller 400 (S110). The power controller 400 controls the power generator 450 in response to the power-on control signal POCTL, and therefore the power generator 450 provides the one or more power voltages to the memory device 500.

An initialization sequence associated with the memory device 500 (S112) may be performed under the control of the first virtual machine VM1 before or after the generation of the power-on control signal POCTL by the first virtual machine VM1 (S110).

Until such time as each of the guest virtual machines VM2, VM3, and VM4 receives a power-on message POMSG, the guest virtual machines VM2, VM3, and VM4 are respectively assumed to be waiting for an instruction or performing some other work, task or operation (S114-1), (S114-2), and (S114-3).

Following completion of the initialization sequence for the memory device 500, a power-on message POMSG generated by the first virtual machine VM1 is sent to the first sub-mailbox MB1A of the first mailbox 311 (S116). Here, it is further assumed that the power-on message POMSG indicates that each of the virtual machines VM2, VM3, and VM4 may use the memory device 500 normally.

The power-on message POMSG is then sent from the first sub-mailbox MB1A of the first mailbox 311 to the guest virtual machines VM2, VM3, and VM4 through the first sub-mailboxes MB2A, MB3A, and MB4A respectively associated with the mailboxes 321, 331, and 341 (S118-1), (S118-2), and (S118-3).

Thereafter, the guest virtual machines VM2, VM3, and VM4 may perform (e.g.,) a booting sequence in response to the power-on message POMSG (S120-1), (S120-2), and (S120-3). After completion of the respective booting sequences, the guest virtual machines VM2, VM3, and VM4 may respectively and normally interact with (e.g., access) the memory device 500.

Referring to FIG. 5, the power-off operation for the memory device 500 will be described with reference to FIGS. 1, 2, 3 and 5. Here, a sequence for turning off power to one or more of the virtual machines VM2, VM3, and VM4 may be performed before the power-off operation for the memory device 500 is performed.

In order to perform the power-off operation for the memory device 500, the first virtual machine VM1 may generate a power-off-ready message PDMSG indicating a preparation state in relation to an impending power-off operation, and send the power-off-ready message PDMSG to the first sub-mailbox MB1A of the first mailbox 311 (S210).

Thereafter, the power-off-ready message PDMSG may be respectively sent from the first sub-mailbox MB1A of the first mailbox 311 to the guest virtual machines VM2, VM3, and VM4 through the first sub-mailboxes MB2A, MB3A, and MB4A of the mailboxes 321, 331, and 341 (S212-1), (S212-2), and (S212-3).

In response to the power-off-ready message PDMSG, each of the guest virtual machines VM2, VM3, and VM4, if currently active, will stop performing a current operation (S214-1), (S214-2), and (S214-3). Upon stopping operation, each of the guest virtual machines VM2, VM3, and VM4 generates a respective, preparation-complete message ACK1, ACK2, and ACK3 indicating completion of preparation for the impending power-off operation. Then, each of the guest virtual machines VM2, VM3, and VM4 respectively sends the preparation-complete message ACK1, ACK2, and ACK3 to the second sub-mailboxes MB2B, MB3B, and MB4B of the mailboxes 321, 331, and 341 (S216-1), (S216-2), and (S216-3).

The second sub-mailbox MB1B of the first mailbox 311 may then receive the respective, preparation-complete messages ACK1, ACK2, and ACK3 from the second sub-mailboxes MB2B, MB3B, and MB4B of the mailboxes 321, 331, and 341 and send the preparation-complete messages ACK1, ACK2, and ACK3 to the first virtual machine VM1 (S218).

Once the first virtual machine VM1 receives the preparation-complete messages ACK1, ACK2, and ACK3 (S220), it may generate a power-off control signal PDCTL that turns off power supplied to the memory device 500, and send the power-off control signal PDCTL to the power controller 400 (S222). In response to the power-off control signal PDCTL, the power controller 400 controls the power generator 450 to turn off the power supplied to the memory device 500.

Referring to FIG. 6, a reset operation for the memory device 500 will be described with reference to FIGS. 1, 2, 3 and 6.

For example, if an unrecoverable error occurs in one or more of the virtual machines VM1, VM2, VM3, or VM4 while the corresponding virtual machine VM1, VM2, VM3, or VM4 processes an I/O command, the memory device 500 may require reset. Here, the term "unrecoverable error" may denote a software error and/or a hardware error. Thus, if an unrecoverable error occurs in the host virtual machine VM1 or one of the guest virtual machines VM2, VM3, and VM3, it becomes necessary for the host virtual machine VM1 to variously communicate with the guest virtual machines VM2, VM3, and VM3 through the mailboxes 311, 321, 331, and 341.

As one example, the illustrated example of FIG. 6 proceeds from an assumption that the second virtual machine VM2 operating as a guest virtual machine experiences an unrecoverable error and must recover from same. Accordingly, when the unrecoverable error occurs in the second virtual machine VM2 (S310), the second virtual machine VM2 may generate a reset request message RMSG indicating a reset requirement, and send the reset request message RMSG to the second sub-mailbox MB2B of the second mailbox 321 (S312). Thereafter, the reset request message RMSG from the second sub-mailbox MB2B of the second mailbox 321 may be sent to the first virtual machine VM1 through the second sub-mailbox MB1B of the first mailbox 311 (S314).

Upon receiving the reset request message RMSG, the first virtual machine VM1 stops performing a current operation and performs a reset preparation (S316).

When the reset preparation is complete, the first virtual machine VM1 may generate a reset-ready message SMSG indicating that the virtual machines VM2, VM3, and VM4 should prepare for reset, and send the reset-ready message SMSG to the first sub-mailbox MB1A of the first mailbox 311 (S318). The reset-ready message SMSG from the first sub-mailbox MB1A of the first mailbox 311 may be sent to the virtual machines VM2, VM3, and VM4 through the first sub-mailboxes MB2A, MB3A, and MB4A of the mailboxes 321, 331, and 341 (S320-1), (S320-2), and (S320-3).

Once the respective virtual machines VM2, VM3, and VM4 complete reset preparation (e.g., stopping current operations) in response to the reset-ready messages SMSG communicated through the first sub-mailboxes MB2A, MB3A, and MB4A, each of the virtual machines VM2, VM3, and VM4 may generate a reset-ready completion message RACK1, RACK2, and RACK3 indicating that reset preparation is complete. Thereafter, the reset-ready completion messages RACK1, RACK2, and RACK3 may be communicated to the first virtual machine VM1 through second sub-mailboxes MB2B, MB3B, and MB4B of the mailboxes 321, 331, and 341 (S322-1), (S322-2), and (S322-3). Accordingly, the reset-ready completion messages RACK1, RACK2, and RACK3 from the second sub-mailboxes MB2B, MB3B, and MB4B may be sent to the first virtual machine VM1 through the second sub-mailbox MB1B of the first mailbox 311 (S324).

Upon receiving the reset-ready completion messages RACK1, RACK2, and RACK3, the first virtual machine VM1 may generate a reset control signal RST that resets the memory device 500, and sends the reset control signal RST to the memory device 500 (e.g., through the reset pin 112) (S326). The memory device 500 is reset in response to the reset control signal RST.

After the memory device 500 has been reset, the first virtual machine VM1 may generate a reset completion message CMSG, and send the reset completion message CMSG to the first sub-mailbox MB1A of the first mailbox 311 (S328). That is, the reset completion message CMSG from the first sub-mailbox MB1A of the first mailbox 311 may be sent to the virtual machines VM2, VM3, and VM4 through the first sub-mailboxes MB2A, MB3A, and MB4A of the mailboxes 321, 331, and 341 (S330-1), (S330-2), and (S330-3), such that the virtual machines VM2, VM3, and VM4 receive the reset completion message CMSG and may determine that the memory device 500 has been reset.

The foregoing operations described in relation to FIGS. 4, 5 and 6 are merely representative example of many operations that may be performed by constituent virtual machines in a system-on-chip consistent with embodiments of the inventive concept using respective mailboxes. Thus, methods and devices according to embodiments of the inventive concept may use mailboxes included in memory controllers and implemented in hardware to communicate a range of messages between virtual machines, instead of using a hypervisor as an intermediary between the virtual machines. As a result communication between virtual machines is faster, yet also more efficient and more stable. In some embodiments, the foregoing approach allows omission of the hypervisor from system design.

While the inventive concept has been described with reference to certain illustrated embodiments, it will be apparent to those of ordinary skill in the art that various changes and modifications may be made thereto without departing from the scope of the inventive concept as set forth in the following claims.

## Claims

1. A system on chip (110) comprising:
a first virtual machine (210);
a second virtual machine (220);
a first memory controller (310) including a first mailbox (311), and configured to control operation of a memory device (500) under control of the first virtual machine (210); and
a second memory controller (320) including a second mailbox (321), and configured to control operation of the memory device (500) under control of the second virtual machine (220);
wherein the first mailbox (311) includes a first sub-mailbox (MB1A) configured to communicate outgoing messages and a second sub-mailbox (MB1B) separate from the first sub-mailbox (MB1A) and configured to communicate incoming messages;
wherein the second mailbox (321) includes a first sub-mailbox (MB2A) configured to communicate incoming messages and a second sub-mailbox (MB2B) separate from the first sub-mailbox (MB2A) and configured to communicate outgoing messages;
wherein the first sub-mailbox (MB1A) of the first mailbox (311) and the first sub-mailbox (MB2A) of the second mailbox (321) are directly connected in hardware via a bus (350, 360); and
wherein the second sub-mailbox (MB1B) of the first mailbox (311) and the second sub-mailbox (MB2B) of the second mailbox (321) are directly connected in hardware via the bus (350, 360).

2. The system on chip (110) of claim 1, further comprising:
a multi-core processor (200) including a first processor core and a second processor core,
wherein the first virtual machine (210) includes a first operating system executable in the first processor core, and the second virtual machine (220) includes a second operating system executable in the second processor core.

3. The system on chip (110) of any preceding claim, wherein the first virtual machine (210) is further configured to generate a first message associated with operation of the memory device (500) and send the first message to the second virtual machine (220) through the first mailbox (311) and the second mailbox (321).

4. The system on chip (110) of claim 3, wherein the first message is one of a power-on message for the memory device (500), a power-off message for the memory device (500), and a reset message for the memory device (500).

5. The system on chip (110) of claim 3 or claim 4, wherein, the second virtual machine (220) is configured such that, when the first virtual machine (210) is a host virtual machine and the second virtual machine (220) is a guest virtual machine, the second virtual machine (220) performs a booting sequence in response to the first message.

6. The system on chip (110) of any of claims 3-5, wherein, the first virtual machine (210) is configured to generate the first message after generating a power-on control signal for powering on the memory device (500).

7. The system on chip (110) of any of claims 3-6, wherein the second virtual machine (220) is configured to:
generate a second message indicating completion of an operation corresponding to the first message, and
send the second message to the first virtual machine (210) through the first mailbox (311) and the second mailbox (321).

8. The system on chip (110) of claim 7,
wherein the system on chip (110) is configured such that, when the first virtual machine (210) is a host virtual machine and the second virtual machine (220) is a guest virtual machine:
the first message is sent to the second virtual machine (220) through the first submailbox (MB1A) of the first mailbox (311) and the first submailbox (MB2A) of the second mailbox (321); and
the second message is sent to the first virtual machine (210) through the second submailbox (MB2B) of the second mailbox (321) and the second submailbox (MB1B) of the first mailbox (311).

9. The system on chip (110) of claim 7 or claim 8, wherein the first virtual machine (210) is configured to generate a power-off control signal for powering off the memory device (500) after the first virtual machine (210) receives the second message.

10. The system on chip (110) of any preceding claim, wherein the system on chip (110) is configured such that, when the first virtual machine (210) is a host virtual machine and the second virtual machine (220) is a guest virtual machine:
the guest virtual machine generates a first message indicating that an error occurs in the guest virtual machine and sends the first message to the host virtual machine through the second mailbox (321) and the first mailbox (311);
the host virtual machine stops performing operation in response to the first message, generates a second message indicating reset preparation, and sends the second message to the guest virtual machine through the first mailbox (311) and the second mailbox (321);
the guest virtual machine completes the reset preparation in response to the second message, generates a third message indicating completion, and send the third message to the host virtual machine through the second mailbox (321) and the first mailbox (311), and
the host virtual machine generates a reset control signal for resetting the memory device (500) in response to the third message, generates a fourth message after the memory device (500) is completely reset, and sends the fourth message to the guest virtual machine through the first mailbox (311) and the second mailbox (321).

11. An in-vehicle infotainment system (100) comprising:
a nonvolatile memory device; and
a system on chip (110) according to any preceding claim, wherein the system on chip (110) is configured to control operation of the nonvolatile memory device.

12. The in-vehicle infotainment system (100) of claim 11, wherein the system on chip (110) is configured such that, when the first virtual machine (210) is a host virtual machine and the second virtual machine (220) is a guest virtual machine;
the host virtual machine generates a message associated with a power-on or a power-off of the nonvolatile memory device; and
the message is sent to the second virtual machine (220) through the first mailbox (311) and the second mailbox (321).

13. The in-vehicle infotainment system of claim 11 or claim 12, wherein the system on chip (110) is configured such that, when the first virtual machine (210) is a host virtual machine and the second virtual machine (220) is a guest virtual machine;
the first virtual machine generates a message associated with a reset of the nonvolatile memory device; and
the message is sent to the second virtual machine (220) through the first mailbox (311) and the second mailbox (321).

14. A method for communicating between a first virtual machine (210) and a second virtual machine (220), the method comprising:
generating a message using the first virtual machine (210);
storing the message in a first sub-mailbox (MB1A) of a first mailbox (311) associated with a first memory controller (310), wherein the first sub-mailbox (MB1A) of the first mailbox (311) is configured to communicate outgoing messages;
checking the message sent to a first sub-mailbox (MB2A) of a second mailbox (321) from the first sub-mailbox (MB1A) of the first mailbox (311) using a second memory controller (320) including the second mailbox (321), wherein the first sub-mailbox (MB2A) of the second mailbox (311) is configured to communicate incoming messages; and
sending the message stored in the the first sub-mailbox (MB2A) of second mailbox (321) to the second virtual machine (220) using the second memory controller (320),
wherein the first sub-mailbox (MB1A) of the first mailbox (311) and the first sub-mailbox (MB2A) of the second mailbox (321) are directly connected in hardware via a bus (350, 360).

## Patentansprüche

1. System-on-Chip (110), umfassend:
eine erste virtuelle Maschine (210);
eine zweite virtuelle Maschine (220);
eine erste Speichersteuereinheit (310), die eine erste Mailbox (311) beinhaltet, die konfiguriert ist, um einen Betrieb einer Speichervorrichtung (500) unter Steuerung der ersten virtuellen Maschine (210) zu steuern; und
eine zweite Speichersteuereinheit (320), die eine zweite Mailbox (321) beinhaltet, die konfiguriert ist, um einen Betrieb der Speichervorrichtung (500) unter Steuerung der zweiten virtuellen Maschine (220) zu steuern;
wobei die erste Mailbox (311) eine erste Sub-Mailbox (MB1A) beinhaltet, die konfiguriert ist, um ausgehende Nachrichten zu kommunizieren und eine zweite Sub-Mailbox (MB1B), die von der ersten Sub-Mailbox (MB1A) getrennt ist und konfiguriert ist, um eingehende Nachrichten zu kommunizieren;
wobei die zweite Mailbox (321) eine erste Sub-Mailbox (MB2A) beinhaltet, die konfiguriert ist, um eingehende Nachrichten zu kommunizieren und eine zweite Sub-Mailbox (MB2B), die von der ersten Sub-Mailbox (MB2A) getrennt ist und konfiguriert ist, um ausgehende Nachrichten zu kommunizieren;
wobei die erste Sub-Mailbox (MB1A) der ersten Mailbox (311) und die erste Sub-Mailbox (MB2A) der zweiten Mailbox (321) hardwareseitig direkt über einen Bus (350, 360) verbunden sind; und
wobei das zweite Sub-Mailbox (MB1B) der ersten Mailbox (311) und die zweite Sub-Mailbox (MB2B) der zweiten Mailbox (321) hardwareseitig direkt über den Bus (350, 360) verbunden sind.

2. System-on-Chip (110) nach Anspruch 1, weiter umfassend:
einen Mehrkernprozessor (200), der einen ersten Prozessorkern und einen zweiten Prozessorkern beinhaltet,
wobei die erste virtuelle Maschine (210) ein erstes Betriebssystem beinhaltet, das im ersten Prozessorkern ausführbar ist, und die zweite virtuelle Maschine (220) ein zweites Betriebssystem beinhaltet, das im zweiten Prozessorkern ausführbar ist.

3. System-on-Chip (110) nach einem vorstehenden Anspruch, wobei die erste virtuelle Maschine (210) weiter konfiguriert ist, um eine erste Nachricht zu generieren, die einem Betrieb der Speichervorrichtung (500) zugeordnet ist, und die erste Nachricht durch die erste Mailbox (311) und die zweite Mailbox (321) an die zweite virtuelle Maschine (220) sendet.

4. System-on-Chip (110) nach Anspruch 3, wobei die erste Nachricht eine von einer Einschaltnachricht für die Speichervorrichtung (500), einer Ausschaltnachricht für die Speichervorrichtung (500) und einer Rücksetznachricht für die Speichervorrichtung (500) ist.

5. System-on-Chip (110) nach Anspruch 3 oder Anspruch 4, wobei die zweite virtuelle Maschine (220) so konfiguriert ist, dass, wenn die erste virtuelle Maschine (210) eine virtuelle Host-Maschine ist und die zweite virtuelle Maschine (220) eine virtuelle Guest-Maschine ist, die zweite virtuelle Maschine (220) als Reaktion auf die erste Nachricht eine Bootsequenz durchführt.

6. System-on-Chip (110) nach einem der Ansprüche 3-5, wobei die erste virtuelle Maschine (210) konfiguriert ist, um die erste Nachricht nach Generieren eines Einschaltsteuersignals zum Einschalten der Speichervorrichtung (500) zu generieren.

7. System-on-Chip (110) nach einem der Ansprüche 3-6, wobei die zweite virtuelle Maschine (220) konfiguriert ist, um:
eine zweite Nachricht zu generieren, die den Abschluss einer der ersten Nachricht entsprechenden Operation angibt, und
die zweite Nachricht durch die erste Mailbox (311) und die zweite Mailbox (321) an die erste virtuelle Maschine (210) zu senden.

8. System-on-Chip (110) nach Anspruch 7,
wobei das System-on-Chip (110) so konfiguriert ist, dass, wenn die erste virtuelle Maschine (210) eine virtuelle Host-Maschine ist und die zweite virtuelle Maschine (220) eine virtuelle Guest-Maschine ist:
die erste Nachricht durch die erste Sub-Mailbox (MB1A) der ersten Mailbox (311) und die erste Sub-Mailbox (MB2A) der zweiten Mailbox ( (321) an die zweite virtuelle Maschine (220) gesendet wird; und
die zweite Nachricht durch die zweite Sub-Mailbox (MB2B) der zweiten Mailbox (321) und die zweite Sub-Mailbox (MB1B) der ersten Mailbox (311) an die erste virtuelle Maschine (210) gesendet wird.

9. System-on-Chip (110) nach Anspruch 7 oder Anspruch 8, wobei die erste virtuelle Maschine (210) konfiguriert ist, um ein Abschaltsteuersignal zum Ausschalten der Speichervorrichtung (500) zu generieren, nachdem die erste virtuelle Maschine (210) die zweite Nachricht empfangen hat.

10. System-on-Chip (110) nach einem vorstehenden Anspruch, wobei das System-on-Chip (110) konfiguriert ist, sodass, wenn die erste virtuelle Maschine (210) eine virtuelle Host-Maschine ist und die zweite virtuelle Maschine (220) eine virtuelle Guest-Maschine ist:
die virtuelle Guest-Maschine eine erste Nacricht generiert, die angibt, dass in der virtuellen Guest-Maschine ein Fehler aufgetreten ist, und die erste Meldung durch die zweite Mailbox (321) und die erste Mailbox (311) an die Host-Maschine sendet;
die virtuelle Host-Maschine als Reaktion auf die erste Nachricht Durchführen des Betriebs einstellt, eine zweite Nachricht generiert, die eine Reset-Vorbereitung angibt, und die zweite Nachricht durch die erste Mailbox (311) und die zweite Mailbox (321) an die virtuelle Guest-Maschine sendet;
die virtuelle Guest-Maschine die Reset-Vorbereitung als Reaktion auf die zweite Nachricht abschließt, eine dritte Nachricht generiert, die den Abschluss angibt, und die dritte Nachricht durch die zweite Mailbox (321) und die erste Mailbox (311) an die virtuelle Host-Maschine sendet, und
die virtuelle Host-Maschine als Reakton auf die dritte Nachricht ein Reset-Steuersignal zum Zurücksetzen der Speichervorrichtung (500) generiert, nach dem vollständigen Zurücksetzen der Speichervorrichtung (500) eine vierte Nachricht generiert und die vierte Nachricht durch die erste Mailbox (311) und die zweite Mailbox (321) an die virtuelle Guest-Maschine sendet.

11. Im Fahrzeug integriertes Infotainmentsystem (100), umfassend:
eine nichtflüchtige Speichervorrichtung; und
ein System-on-Chip (110) nach einem der vorstehenden Ansprüche, wobei das System-on-Chip (110) konfiguriert ist, um einen Betrieb der nichtflüchtigen Speichervorrichtung zu steuern.

12. Im Fahrzeug integriertes Infotainmentsystem (100) nach Anspruch 11, wobei das System-on-Chip (110) so konfiguriert ist, dass, wenn die erste virtuelle Maschine (210) eine virtuelle Host-Maschine ist und die zweite virtuelle Maschine (220) eine virtuelle Guest-Maschine ist;
die virtuelle Host-Maschine eine Nachricht generiert, die einem Ein- oder Ausschalten der nichtflüchtigen Speichervorrichtung zugeordnet ist; und
die Nachricht durch die erste Mailbox (311) und die zweite Mailbox (321) an die zweite virtuelle Maschine (220) gesendet wird.

13. Im Fahrzeug integriertes Infotainmentsystem nach Anspruch 11 oder Anspruch 12, wobei das System-on-Chip (110) so konfiguriert ist, dass, wenn die erste virtuelle Maschine (210) eine virtuelle Host-Maschine ist und die zweite virtuelle Maschine (220) eine virtuelle Guest-Maschine ist;
die erste virtuelle Maschine eine Nachricht generiert, die einem Zurücksetzen der nichtflüchtigen Speichervorrichtung zugeordnet ist; und
die Nachricht durch die erste Mailbox (311) und die zweite Mailbox (321) an die zweite virtuelle Maschine (220) gesendet wird.

14. Verfahren zur Kommunikation zwischen einer ersten virtuellen Maschine (210) und einer zweiten virtuellen Maschine (220), wobei das Verfahren Folgendes umfasst:
Generieren einer Nachricht unter Verwendung der ersten virtuellen Maschine (210);
Speichern der Nachricht in einer ersten Sub-Mailbox (MB1A) einer ersten Mailbox (311), das einer ersten Speichersteuervorrichtung (310) zugeordnet ist, wobei die erste Sub-Mailbox (MB1A) der ersten Mailbox (311) konfiguriert ist, um ausgehende Nachrichten zu kommunizieren;
Überprüfung der Nachricht, die von der ersten Sub-Mailbox (MB1A) der ersten Mailbox (311) an eine erste Sub-Mailbox (MB2A) einer zweiten Mailbox (321) gesendet wurde, unter Verwendung einer zweiten Speichersteuereinheit (320), welche die zweite Mailbox (321) beinhaltet, wobei die erste Sub-Mailbox (MB2A) der zweiten Mailbox (311) konfiguriert ist, um eingehende Nachrichten zu kommunizieren; und
Senden der in der ersten Sub-Mailbox (MB2A) der zweiten Mailbox (321) gespeicherten Nachricht an die zweite virtuelle Maschine (220) unter Verwendung der zweiten Speichersteuereinheit (320),
wobei die erste Sub-Mailbox (MB1A) der ersten Mailbox (311) und die erste Sub-Mailbox (MB2A) der zweiten Mailbox (321) hardwareseitig direkt über einen Bus (350, 360) verbunden sind.

## Revendications

1. Système sur puce (110) comprenant :
une première machine virtuelle (210) ;
une seconde machine virtuelle (220) ;
un premier dispositif de commande de mémoire (310) incluant une première boîte aux lettres (311), et configuré pour commander le fonctionnement d'un dispositif de mémoire (500) sous la commande de la première machine virtuelle (210) ; et
un second dispositif de commande de mémoire (320) incluant une seconde boîte aux lettres (321), et configuré pour commander le fonctionnement du dispositif de mémoire (500) sous la commande de la seconde machine virtuelle (220) ;
dans lequel la première boîte aux lettres (311) inclut une première sous-boîte aux lettres (MB1A) configurée pour communiquer les messages sortants et une seconde sous-boîte aux lettres (MB1B) distincte de la première sous-boîte aux lettres (MB1A) et configurée pour communiquer les messages entrants ;
dans lequel la seconde boîte aux lettres (321) inclut une première sous-boîte aux lettres (MB2A) configurée pour communiquer les messages entrants et une seconde sous-boîte aux lettres (MB2B) distincte de la première sous-boîte aux lettres (MB2A) et configurée pour communiquer les messages sortants ;
dans lequel la première sous-boîte aux lettres (MB1A) de la première boîte aux lettres (311) et la première sous-boîte aux lettres (MB2A) de la seconde boîte aux lettres (321) sont directement connectées matériellement via un bus (350, 360) ; et
dans lequel la seconde sous-boîte aux lettres (MB1B) de la première boîte aux lettres (311) et la seconde sous-boîte aux lettres (MB2B) de la seconde boîte aux lettres (321) sont directement connectées matériellement via le bus (350, 360).

2. Système sur puce (110) selon la revendication 1, comprenant en outre :
un processeur multicœur (200) incluant un premier cœur de processeur et un second cœur de processeur,
dans lequel la première machine virtuelle (210) inclut un premier système d'exploitation exécutable dans le premier cœur de processeur, et la seconde machine virtuelle (220) inclut un second système d'exploitation exécutable dans le second cœur de processeur.

3. Système sur puce (110) selon une quelconque revendication précédente, dans lequel la première machine virtuelle (210) est en outre configurée pour générer un premier message associé au fonctionnement du dispositif de mémoire (500) et envoyer le premier message à la seconde machine virtuelle (220) via la première boîte aux lettres (311) et la seconde boîte aux lettres (321).

4. Système sur puce (110) selon la revendication 3, dans lequel le premier message est l'un parmi un message de mise sous tension pour le dispositif de mémoire (500), un message de mise hors tension pour le dispositif de mémoire (500) et un message de réinitialisation pour le dispositif de mémoire (500).

5. Système sur puce (110) selon la revendication 3 ou la revendication 4, dans lequel la seconde machine virtuelle (220) est configurée de telle sorte que, lorsque la première machine virtuelle (210) est une machine virtuelle hôte et la seconde machine virtuelle (220) est une machine virtuelle invitée, la seconde machine virtuelle (220) effectue une séquence de démarrage en réponse au premier message.

6. Système sur puce (110) selon l'une quelconque des revendications 3-5, dans lequel la première machine virtuelle (210) est configurée pour générer le premier message après avoir généré un signal de commande de mise sous tension pour mettre sous tension le dispositif de mémoire (500).

7. Système sur puce (110) selon l'une quelconque des revendications 3-6, dans lequel la seconde machine virtuelle (220) est configurée pour :
générer un deuxième message indiquant l'achèvement d'une opération correspondant au premier message, et
envoyer le deuxième message à la première machine virtuelle (210) via la première boîte aux lettres (311) et la seconde boîte aux lettres (321).

8. Système sur puce (110) selon la revendication 7,
dans lequel le système sur puce (110) est configuré de telle sorte que, lorsque la première machine virtuelle (210) est une machine virtuelle hôte et la seconde machine virtuelle (220) est une machine virtuelle invitée :
le premier message est envoyé à la seconde machine virtuelle (220) via la première sous-boîte aux lettres (MB1A) de la première boîte aux lettres (311) et la première sous-boîte aux lettres (MB2A) de la seconde boîte aux lettres (321) ; et
le deuxième message est envoyé à la première machine virtuelle (210) via la seconde sous-boîte aux lettres (MB2B) de la seconde boîte aux lettres (321) et la seconde sous-boîte aux lettres (MB1B) de la première boîte aux lettres (311).

9. Système sur puce (110) selon la revendication 7 ou la revendication 8, dans lequel la première machine virtuelle (210) est configurée pour générer un signal de commande de mise hors tension pour mettre hors tension le dispositif de mémoire (500) après que la première machine virtuelle (210) a reçu le deuxième message.

10. Système sur puce (110) selon une quelconque revendication précédente, dans lequel le système sur puce (110) est configuré de telle sorte que, lorsque la première machine virtuelle (210) est une machine virtuelle hôte et la seconde machine virtuelle (220) est une machine virtuelle invitée :
la machine virtuelle invitée génère un premier message indiquant qu'une erreur se produit dans la machine virtuelle invitée et envoie le premier message à la machine virtuelle hôte via la seconde boîte aux lettres (321) et la première boîte aux lettres (311) ;
la machine virtuelle hôte cesse d'effectuer une opération en réponse au premier message, génère un deuxième message indiquant la préparation de la réinitialisation et envoie le deuxième message à la machine virtuelle invitée via la première boîte aux lettres (311) et la seconde boîte aux lettres (321) ;
la machine virtuelle invitée termine la préparation de la réinitialisation en réponse au deuxième message, génère un troisième message indiquant l'achèvement et envoie le troisième message à la machine virtuelle hôte via la seconde boîte aux lettres (321) et la première boîte aux lettres (311), et
la machine virtuelle hôte génère un signal de commande de réinitialisation pour réinitialiser le dispositif de mémoire (500) en réponse au troisième message, génère un quatrième message après que le dispositif de mémoire (500) a été complètement réinitialisé et envoie le quatrième message à la machine virtuelle invitée via la première boîte aux lettres (311) et la seconde boîte aux lettres (321).

11. Système d'infodivertissement embarqué (100) comprenant :
un dispositif de mémoire non volatile ; et
un système sur puce (110) selon une quelconque revendication précédente, dans lequel le système sur puce (110) est configuré pour commander le fonctionnement du dispositif de mémoire non volatile.

12. Système d'infodivertissement embarqué (100) selon la revendication 11, dans lequel le système sur puce (110) est configuré de telle sorte que, lorsque la première machine virtuelle (210) est une machine virtuelle hôte et la seconde machine virtuelle (220) est une machine virtuelle invitée :
la machine virtuelle hôte génère un message associé à la mise sous tension ou hors tension du dispositif de mémoire non volatile ; et
le message est envoyé à la seconde machine virtuelle (220) via la première boîte aux lettres (311) et la seconde boîte aux lettres (321).

13. Système d'infodivertissement embarqué selon la revendication 11 ou la revendication 12, dans lequel le système sur puce (110) est configuré de telle sorte que, lorsque la première machine virtuelle (210) est une machine virtuelle hôte et la seconde machine virtuelle (220) est une machine virtuelle invitée :
la première machine virtuelle génère un message associé à une réinitialisation du dispositif de mémoire non volatile ; et
le message est envoyé à la seconde machine virtuelle (220) via la première boîte aux lettres (311) et la seconde boîte aux lettres (321).

14. Procédé de communication entre une première machine virtuelle (210) et une seconde machine virtuelle (220), le procédé comprenant :
la génération d'un message à l'aide de la première machine virtuelle (210) ;
le stockage du message dans une première sous-boîte aux lettres (MB1A) d'une première boîte aux lettres (311) associée à un premier dispositif de commande de mémoire (310), dans lequel la première sous-boîte aux lettres (MB1A) de la première boîte aux lettres (311) est configurée pour communiquer les messages sortants ;
la vérification du message envoyé à une première sous-boîte aux lettres (MB2A) d'une seconde boîte aux lettres (321) depuis la première sous-boîte aux lettres (MB1A) de la première boîte aux lettres (311) à l'aide d'un second dispositif de commande de mémoire (320) incluant la seconde boîte aux lettres (321), dans lequel la première sous-boîte aux lettres (MB2A) de la seconde boîte aux lettres (311) est configurée pour communiquer les messages entrants ; et
l'envoi du message stocké dans la première sous-boîte aux lettres (MB2A) de la seconde boîte aux lettres (321) à la seconde machine virtuelle (220) en utilisant le second dispositif de commande de mémoire (320),
dans lequel la première sous-boîte aux lettres (MB1A) de la première boîte aux lettres (311) et la première sous-boîte aux lettres (MB2A) de la seconde boîte aux lettres (321) sont directement connectées matériellement via un bus (350, 360).
